# EUROPÄISCHE PATENTSCHRIFT

(11) **EP 1 778 998 B1**
(45) Veröffentlichungstag und Bekanntmachung des Hinweises auf die Patenterteilung: **19.03.2008**
(21) Anmeldenummer: 05771217.6
(22) Anmeldetag: 11.08.2005
(51) Int. Cl.: F16D 65/14, F16D 65/56

(54) **HYDRAULISCH BETÄTIGBARE FAHRZEUGBREMSE MIT DRUCKENTLASTUNG**
HYDRAULICALLY ACTUATED VEHICLE BRAKE FEATURING PRESSURE RELIEF
FREIN DE VEHICULE A COMMANDE HYDRAULIQUE A DECOMPRESSION

(30) Priorität: 19.08.2004 DE 102004040261
(43) Veröffentlichungstag der Anmeldung: 02.05.2007
(73) Patentinhaber: Lucas Automotive GmbH, 56070 Koblenz (DE)
(72) Erfinder: MOHR, Kurt, 56283 Halsenbach (DE)
(74) Vertreter: Thum, Bernhard
(86) Internationale Anmeldenummer: PCT/EP2005/008744
(87) Internationale Veröffentlichungsnummer: WO 2006/018223

(56) Entgegenhaltungen:
- EP-A- 0 396 231
- WO-A-91/10841
- WO-A-20/04027282
- DE-C1- 19 858 651

## Beschreibung

### Fachgebiet der Erfindung

Die vorliegende Erfindung betrifft eine hydraulisch betätigbare Fahrzeugbremse mit einem Gehäuse, einem in dem Gehäuse aufgenommenen Bremskolben, der mit einem Bremsbelag gekoppelt ist, einer Blockiereinrichtung zum Arretieren des Bremskolbens innerhalb des Gehäuses und einer Betätigungseinrichtung zum Ansteuern der Blockiereinrichtung, wobei der Bremskolben mit dem Gehäuse eine Fluidkammer begrenzt, die mit Hydraulikfluid beschickbar ist, so dass der Bremskolben zum Betätigen der Fahrzeugbremse hydraulisch innerhalb des Gehäuses entlang einer Kolbenlängsachse verlagerbar ist, und wobei die Blockiereinrichtung ein relativ zu dem Gehäuse verlagerbares Übertragungselement aufweist, welches die Blockiereinrichtung bei deren Betätigung relativ zu einem innerhalb der Fluidkammer herrschenden Fluiddruck druckentlastet.

### Stand der Technik

Eine derartige Fahrzeugbremse ist bereits bekannt. So zeigt beispielsweise das gattungsbildende europäische Patent EP 0 403 635 B1 eine Fahrzeugbremse dieser Art. Bei dieser Fahrzeugbremse wird in einer Betriebsbremssituation der Bremskolben durch Beschicken der Fluidkammer mit Hydraulikfluid innerhalb des Gehäuses verlagert und dadurch der Bremsbelag auf eine rotierende Bremsscheibe gedrückt, um diese abzubremsen. Zur Beendigung des Bremsvorgangs wird Hydraulikfluid aus der Fluidkammer abgeführt, so dass sich der Bremskolben mit dem daran angebrachten Bremsbelag in seine Ausgangsstellung zurückbewegen kann. In einer Feststellbremssituation, in welcher beispielsweise ein mit einer derartigen Fahrzeugbremse ausgestattetes Fahrzeug abgestellt und gegen ein unbeabsichtigtes Wegrollen gesichert werden soll, wird vermittels eines über einen Handhebel oder ein Pedal verlagerbaren Bowdenzugs ein an der Blockiereinrichtung vorgesehener Hebel verschwenkt. Die Verschwenkung des Hebels bewirkt, dass sich eine in der Fahrzeugbremse vorgesehene Rampenanordnung innerhalb des Gehäuses spreizt und somit eine Hubbewegung in Richtung der Kolbenlängsachse ausführt. Diese Hubbewegung wird auf ein Blockierelement der Blockiereinrichtung übertragen, welches sodann entgegen der Wirkung einer Rückstellfeder auf den Bremskolben drückt und diesen axial verlagert. Zum Aufheben der Feststellbremssituation wird wiederum der Hebel der Blockiereinrichtung in seine Ausgangsstellung gebracht, woraufhin sich die Rampenanordnung aus ihrer gespreizten Stellung in ihre Ausgangsstellung zurück verlagert. Unter der Wirkung der Rückstellfeder verlagert sich auch das Blockierelement zusammen mit dem Bremskolben in seine Ausgangsstellung, so dass der Bremsbelag die Bremsscheibe freigibt.

Bei diesem Stand der Technik hat sich gezeigt, dass die Wirkung der Fahrzeugbremse in einer Feststellbremssituation von den Elastizitätseigenschaften der einzelnen in dem Kraftübertragungsweg von dem Handhebel bzw. dem Pedal zu dem Bremsbelag eingebundenen Komponenten sowie von deren thermischen Eigenschaften abhängt. So kann es durch elastische Deformation und Abkühlung einzelner Komponenten zu Maßänderungen kommen, die dann zu einer unerwünschten Klemmkraftreduzierung und zu einer daraus resultierenden unzureichenden Feststellbremswirkung führen. Um diesem Problem entgegenzuwirken, sind sehr hohe Betätigungskräfte erforderlich. Die Größe der Betätigungskräfte wird dadurch ferner erhöht, dass bei einer Aktivierung der Feststellbremswirkung zusätzlich auch gegen den Druck innerhalb der Fluidkammer gearbeitet werden muss.

Um dem Problem hoher Betätigungskräfte, die insbesondere manuell aufzubringen sind, entgegenzuwirken, zeigt beispielsweise der Stand der Technik gemäß EP 0 551 397 D1 eine hydraulisch betätigbare Fahrzeugbremse, bei welcher zur Aktivierung der Feststellbremsfunktion zunächst der Bremskolben hydraulisch verlagert wird und anschließend eine Blockierstange elektromotorisch angetrieben wird, bis diese den Bremskolben kontaktiert. Die Blockierstange ist mit einem Außengewinde versehen, welches mit einem in dem Gehäuse vorgesehenen Innengewinde in Eingriff steht. Die miteinander in Eingriff stehenden Gewinde sind selbsthemmend ausgebildet, so dass eine gegenseitige Drehung zwischen der Blockierstange und dem Gehäuse bei einer auf die Blockierstange einwirkenden Axialkraft verhindert wird. Sobald die Blockierstange den Bremskolben kontaktiert, wird das Hydraulikfluid wieder aus der Kammer abgelassen. Dabei versucht der Bremskolben sich in seine Ausgangsstellung zurückzubewegen, woran er jedoch von der an ihr anliegenden Blockierstange gehindert wird. Die Bremse befindet sich so in ihrer Feststellbremslage. Zum Lösen der Feststellbremswirkung wird wiederum die Fluidkammer mit Hydraulikfluid beschickt, so dass die Blockierstange von dem Bremskolben freigegeben wird. Sodann kann sie über den Elektromotor in ihre Ausgangsstellung zurückbewegt und anschließend das Hydraulikfluid wieder aus der Fluidkammer abgeführt werden. Mit dieser bekannten Anordnung kann zwar eine Feststellbremswirkung motorisch aktiviert werden. Es ist jedoch eine verhältnismäßig aufwändige und raumfordernde Mechanik und entsprechend leistungsstarke elektromotorische Komponenten erforderlich. Die Bereitstellung leistungsfähiger Komponenten ist insbesondere auch wieder damit zu begründen, dass die Druckstange in die druckbeaufschlagte Fluidkammer eingeführt werden muss und dabei gegen den in der Fluidkammer herrschenden Hydraulikdruck verlagert werden muss.

Als weiterer Stand der Technik sind die Dokumente DE 198 58 651 C1, DE 101 04 158 A1, US 5,788,024 A und EP 1 054 180 A2 zu nennen. Auch die in diesen Dokumenten gezeigten Anordnungen weisen das vorstehend geschilderte Problem auf, dass bei einer Betätigung der Blockiereinrichtung bei einem in der Fluidkammer herrschenden Fluiddruck eine Komponente der Blockiereinrichtung gegen diesen Fluiddruck in die Fuidkammer hineingeschoben werden muss. Die Blockiereinrichtung muss also gegen den in der Fluidkammer herrschenden Fluiddruck betätigt werden, was die Betätigungskräfte erhöht.

Zum allgemeinen Stand der Technik sei ferner auf das Dokument DE 198 24 771 C1 verwiesen, nach dem eine Blockierung mittels einer Kniehebelanordnung erfolgt.

### Aufgabe und erfindungsgemäße Lösung

Es ist eine Aufgabe der vorliegenden Erfindung, eine Fahrzeugbremse der eingangs bezeichneten Art bereitzustellen, welche zur Aktivierung der Feststellbremsfunktion lediglich geringe Betätigungskräfte erfordert und daher einfach und kostengünstig herstellbar ist.

Diese Aufgabe wird durch eine Fahrzeugbremse der eingangs bezeichneten Art gelöst, bei welcher die Blockiereinrichtung ein relativ zu dem Gehäuse verlagerbares Übertragungselement aufweist, welches die Blockiereinrichtung bei deren Betätigung relativ zu einem innerhalb der Fluidkammer herrschenden Fluiddruck druckentlastet.

Durch die Bereitstellung eines in dem Gehäuse verlagerbaren Übertragungselements, das zumindest teilweise in der Fluidkammer untergebracht ist und mit dem darin herrschenden Fluiddruck beaufschlagt wird, ist es möglich, den in der Fluidkammer herrschenden Fluiddruck dahingehend auszunützen, dass druckbedingte Gegenkräfte, die gegen eine Verlagerung der Blockiereinrichtung wirken, zumindest teilweise kompensiert werden können. Insbesondere kann in diesem Zusammenhang erfindungsgemäß vorgesehen sein, dass das Übertragungselement wenigstens eine hydraulisch aktive mit Hydraulikfluid aus der Fluidkammer druckbeaufschlagte Druckentlastungsfläche aufweist. Die hydraulisch aktive Druckentiastungsfiäche ist dabei vorzugsweise so angeordnet, dass sie bei Druckbeaufschlagung der Fluidkammer derart mit Druck beaufschlagt wird, dass sich das Übertragungselement zusammen mit entsprechenden Komponenten der Blockiereinrichtung in Richtung einer Arretierstellung der Blockiereinrichtung verlagert oder zumindest zur Erleichterung einer derartigen Bewegung übrige Komponenten druckentlastet. Dies führt dazu, dass die Betätigungseinrichtung lediglich geringe Stellkräfte aufbringen muss, um die Blockiereinrichtung zum Arretieren des Bremskolbens innerhalb des Gehäuses zu verlagern. Eine weitgehend vollständige Druckentlastung kann beispielsweise dadurch erreicht werden, dass das Übertragungselement zumindest mittelbar beidseits seiner bezüglich einer Verlagerung in der Fluidkammer hydraulisch aktiven Flächen mit Hydraulikfluid aus der Fluidkammer druckbeaufschlagt ist. Das Übertragungselement und mit diesem die Blockiereinrichtung verhält sich somit druckneutral, so dass lediglich konstruktiv bedingte Reibungskräfte aufgebracht werden müssen, um die Blockiereinrichtung in einen Zustand zu versetzen, in dem der Bremskolben blockiert wird.

Zur Ansteuerung der Blockiereinrichtung kann vorgesehen sein, dass die Betätigungseinrichtung manuell oder motorisch antreibbar oder angetrieben ist. Vorzugsweise ist vorgesehen, dass die Betätigungseinrichtung mit einem rotatorischen Antrieb motorisch antreibbar oder angetrieben ist, der mit einem selbsthemmenden Getriebe oder einer mechanischen Verzahnung ausgeführt sein kann. Eine besonders einfache und kostengünstige erfindungsgemäße Variante ergibt sich beispielsweise dann, wenn der Antrieb als Dreh-Elektromagnet ausgebildet ist. Derartige herkömmliche Dreh-Elektromagneten sind kostengünstig verfügbar, können jedoch nur Stellkräfte geringen Betrags aufbringen. Da - wie vorstehend bereits erläutert - durch die Erfindung allerdings eine druckentlastete Betätigung der Blockiereinrichtung möglich wird und somit auch Stellkräfte geringen Betrags zur Betätigung der Blockiereinrichtung ausreichen, bietet sich die Verwendung eines derartigen Dreh-Elektromagneten herkömmlicher Bauart für die Realisierung der erfindungsgemäßen Fahrzeugbremse vorteilhaft an. Dadurch kann die Herstellung der Fahrzeugbremse erheblich verbilligt werden und die Bremse insgesamt kompakt ausgestaltet werden.

Eine Weiterbildung der Erfindung sieht ein Blockierelement vor, das zum Arretieren des Bremskolbens an diesem angreift. Das Blockierelement kann dann über weitere Komponenten der Blockiereinrichtung insbesondere durch Unterstützung des Übertragungselements relativ zu dem Bremskolben verlagert werden.

Um den über den Antrieb der Betätigungseinrichtung zurückzulegenden Hub so gering wie möglich zu halten, sieht eine Weiterbildung der Erfindung vor, dass das Blockierelement in Mitnahmeverbindung mit dem Bremskolben steht. Dies bedeutet, dass das Blockierelement bei einer hydraulischen Verlagerung des Bremskolbens mit diesem mitgenommen wird, beispielsweise mittels eines Sicherungsrings. Erst zum Arretieren des Bremskolbens ist es dann erforderlich, das Blockierelement aktiv über die Betätigungseinrichtung anzusteuern - unterstützt durch das Übertragungselement. Dadurch kann die Reaktionszeit der Fahrzeugbremse, auf einen Befehl zur Aktivierung der Feststellbremswirkung erheblich verkürzt werden. Außerdem bietet dies Vorteile bei der Verschließnachstellung zur Konstanthaltung des Lüftspiels der Fahrzeugbremse.

Gemäß einer Ausführungsform der Erfindung ist vorgesehen, dass die Blockiereinrichtung eine Rampenanordnung aufweist. Die Verwendung einer Rampenanordnung ist im Stand der Technik allgemein bekannt. Sie bietet den Vorteil, dass das Blockierelement durch eine einfache reibungsarme Drehbewegung der Betätigungseinrichtung arretiert werden kann, dass darüber hinaus die aus den großen Klemmkräften resultierenden Reaktionskräfte zuverlässig in das Gehäuse abgeleitet werden können, und dass sich die Fahrzeugbremse aus einer Feststellbremsstellung unter verhältnismäßig geringem Aufwand wieder einfach in eine Ruhestellung überführen lässt. Ein weiterer vorteilhafter Aspekt der Verwendung einer Rampenanordnung liegt darin, dass die aufzubringenden Drehkräfte aufgrund der rampenbedingten Übersetzung verhältnismäßig klein gehalten werden können. Dies kommt wieder der vorstehend erwähnten Ausbildung des Antriebs als Dreh-Elektromagnet zugute, der - wie bereits ausgeführt - nur betragsmäßig kleine Stellkräfte aufbringen kann, die zu einem Drehmoment von beispielsweise 2Nm führen.

Eine Weiterbildung dieser Ausführungsvariante sieht vor, dass die Rampenanordnung wenigstens eine erste Rampenfläche aufweist, welche an dem Gehäuse angebracht ist oder mit diesem drehfest gekoppelt ist, und wenigstens eine zweite Rampenfläche aufweist, die an einem relativ zu dem Gehäuse axial verlagerbaren und mit dem Blockierelement gekoppelten Rampenbauteil ausgebildet ist, wobei bei Betätigung der Betätigungseinrichtung die beiden Rampenflächen zur Verlagerung des Blockierelements aneinander abgleiten. Zur weiteren Reduzierung der Stellkräfte, insbesondere der zu überwindenden Reibungskräfte kann erfindungsgemäß vorgesehen sein, dass zwischen der wenigstens einen ersten Rampenfläche und der wenigstens einen zweiten Rampenfläche Wälzkörper vorgesehen sind, über weiche die wenigstens eine erste Rampenfläche mit der wenigstens einen zweiten Rampenfläche in Kontakt steht.

Bei Ausführung der erfindungsgemäßen Fahrzeugbremse mit einer Rampenanordnung kann vorteilhaft vorgesehen sein, dass das Rampenbauteil mit dem Übertragungselement gekoppelt und durch dieses druckentlastet innerhalb der Fluidkammer verlagerbar ist. So kann das Übertragungselement mit seiner hydraulisch aktiven Fläche derart wirksam sein, dass es bedingt durch den in der Fluidkammer herrschenden Hydraulikdruck das Rampenbauteil derart zu verlagern sucht, dass dieses das Blockierelement in eine Stellung drängt, in welche es den Bremskolben arretiert. Eventuell an dem Rampenbauteil angreifendende hydraulisch bedingte Gegenkräfte können dadurch reduziert oder sogar kompensiert werden. Im letztgenannten Fall sind dann nur noch Reibungskräfte zu überwinden. Vorteilhafterweise wird der Querschnitt der hydraulisch aktiven Fläche des Übertragungselements genau auf den Querschnitt der hydraulisch entgegengerichtet aktiven Fläche des Rampenbauteils abgestimmt, so dass im Idealfall eine vollständige Kompensation der hydraulisch bedingten Gegenkräfte erreicht werden kann. Anders ausgedrückt heben sich die an dem Übertragungselement und an dem Rampenbauteil angreifenden und durch den Fluiddruck der Fluidkammer bedingten hydraulischen Reaktionskräfte bei dieser erfindungsgemäßen Lösung auf.

Alternativ zum Einsatz einer Rampenanordnung sieht eine weitere Ausführungsform der Erfindung vor, dass die Blockiereinrichtung einen drehantreibbaren Profilbolzen aufweist, der je nach Drehstellung den Bremskolben arretiert oder freigibt. Statt mit einer Rampenanordnung lässt sich die Blockiereinrichtung insbesondere deren Blockierelement auch über eine profilierte Steuerkurve verlagern, was letztendlich auch zu einer Arretierung des Bremskolbens führen kann. Bei dieser Ausführungsform kann beispielsweise vorgesehen sein, dass das Übertragungselement mit dem Blockierelement zusammenwirkt und dass der Profilbolzen das Übertragungselement in Richtung der Kolbenlängsachse verschiebt. Um die Fahrzeugbremse kompakter zu gestalten, insbesondere um Bauraum in Richtung der Kolbenlängsachse einzusparen, sieht eine Weiterbildung der Erfindung vor, dass die Drehachse des Profilbolzens in nicht paralleler Ausrichtung zu der Kolbenlängsachse angeordnet ist, vorzugsweise diese in einem Winkel von im Wesentlichen 90° schneidet. Der Profilbolzen weist bei einer derartigen Ausbildung beispielsweise eine sich in Umfangsrichtung um die Drehachse des Profilbolzens herum erstreckende Steuerkurve auf, die mit dem Übertragungselement zusammenwirkt. Um das Übertragungselement druckneutral, d.h. unabhängig von dem in der Fluidkammer herrschenden Fluiddruck, verlagern zu können, ist vorgesehen, dass an dem Übertragungselement beidseits der bezüglich einer Bewegung in Kolbenlängsachse hydraulisch aktiven Flächen Hydraulikfluid aus der Fluidkammer angreifen kann. Dies bedeutet aber auch, dass der Profilbolzen, welcher mit dem Übertragungselement in mechanischer Wechselwirkung steht, Kontakt zu dem Hydraulikfluid hat, beispielsweise weil das Übertragungselement an seiner bremskolbenfernen Seite, die mit dem Profilbolzen zusammenwirkt, druckbeaufschlagt ist. Um eine zuverlässige Funktion der Fahrzeugbremse bei einer derartigen erfindungsgemäßen Ausgestaltung gewährleisten zu können, sieht eine Weiterbildung der Erfindung vor, dass der Profilbolzen fluiddicht in dem Gehäuse geführt ist.

Alternativ hierzu kann vorgesehen sein, dass das Übertragungselement fluiddicht in dem Gehäuse geführt ist. Darüber hinaus ist es auch möglich, dass das Übertragungselement mehrteilig ausgebildet ist. Beispielsweise kann das Übertragungselement mit einem gesonderten Kolbenelement ausgebildet sein, das die vorstehend erwähnte Druckentlastungsfläche aufweist.

Hinsichtlich der Funktionsweise der erfindungsgemäßen Fahrzeugbremse kann vorgesehen sein, dass in einer Betriebsbremssituation der Bremskolben durch Beschicken und Entleeren der Fluidkammer mit Hydraulikfluid innerhalb des Gehäuses verlagerbar ist und dass in einer Feststellbremssituation zunächst der Bremskolben durch Beschicken der Fluidkammer mit Hydraulikfluid innerhalb des Gehäuses verlagert wird, sodann die Betätigungseinrichtung zur Arretierung des Bremskolbens betätigt wird, wobei sich das Übertragungselement auf den Bremskolben zu bewegt, und schließlich für einen Druckabbau in der Fluidkammer Hydraulikfluid aus der Fluidkammer abgeführt wird. Somit kann zur Aktivierung der Feststellbremsfunktion die über eine hydraulische Betätigung und Verlagerung des Bremskolbens aufgebrachte Klemmkraft zum Anlegen und Zuspannen des Bremsbelags auf die Bremsscheibe genutzt werden. Der Bremsbelag muss also durch den Antrieb der erfindungsgemäßen Fahrzeugbremse nicht zusätzlich auf die Bremsscheibe zugestellt werden, was eine leistungsschwache und damit kostengünstige Ausbildung des Antriebs - wie vorstehend schon mehrfach erläutert - möglich macht.

Zum Lösen der Feststellbremssituation ist es bei der vorstehend geschilderten Variante möglich, die Fluidkammer erneut mit Hydraulikfluid zu beschicken, um damit eine mechanische Kopplung zwischen Bremskolben und Blockiereinrichtung aufzuheben. Die Betätigungseinrichtung kann dann entsprechend angesteuert werden und das Blockierelement unter geringen Betätigungskräften in seine Ausgangsstellung zurückfahren, in welcher es den Bremskolben freigibt. Dies geschieht wiederum druckentlastet durch Wirkung des Übertragungselements. Sodann kann wieder Hydraulikfluid aus der Fluidkammer abgeführt werden, so dass sich der Bremskolben in eine bremswirkungsfreie Ausgangsposition zurückbewegen kann.

Die Erfindung betrifft ferner ein Verfahren zum Betätigen einer Fahrzeugbremse der vorstehend beschriebenen Art, wobei in einer Betriebsbremssituation der Bremskolben dadurch innerhalb des Gehäuses verlagert wird, dass Hydraulikfluid der Fluidkammer zugeführt oder aus dieser abgeführt wird, und dass in einer Feststellbremsituation zunächst der Bremskolben durch Beschicken der Fluidkammer mit Hydrauikfluid innerhalb des Gehäuses verlagert wird, sodann die Betätigungseinrichtung zur Arretierung des Bremskolbens betätigt wird, wobei sich das Übertragungselement auf den Bremskolben zu bewegt, und schließlich für einen Druckabbau in der Fluidkammer Hydraulikfluid aus der Fluidkammer abgeführt wird. Ferner kann bei dem erfindungsgemäßen Verfahren vorgesehen sein, dass zum Auflösen der Feststellbremssituation die Fluidkammer mit Hydraulikfluid beschickt wird, sodann die Blockiereinrichtung freigegeben wird und schließlich für einen Druckabbau in der Fluidkammer Hydraulikfluid aus der Fluidkammer abgeführt wird.

Zum Auflösen der Feststellbremsfunktion wird gemäß vorstehender Beschreibung vorgegangen.

Kurze Beschreibung der Figuren.

Die Erfindung wird im Folgenden beispielhaft anhand der beiliegenden Figuren erläutert. Es stellen dar:
- Fig. 1: eine Schnittansicht eines ersten Ausführungsbeispiels der erfindungsgemäßen Fahrzeugbremse;
- Fig. 2: eine schematische Ansicht, bei der die erfindungsgemäße Fahrzeugbremse gemäß Fig. 1 in ein schematisch dargestelltes Fahrzeugbremssystem integriert ist;
- Fg. 3: eine Schnittansicht entsprechend Fig. 1 eines zweiten Ausführungsbeispiels einer erfindungsgemäßen Fahrzeugbremse;
- Fig.4: eine Ansicht entsprechend Fig.1 eines dritten Ausführungsbeispiels einer erfindungsgemäßen Fahrzeugbremse und
- Fig.5: eine in kleinerem Maßstab gezeichnete Schnittansicht des Ausführungsbeispiels gemäß Fig.4 entlang Schnittlinie V-V.

### Beschreibung bevorzugter Ausführungsbeispiele

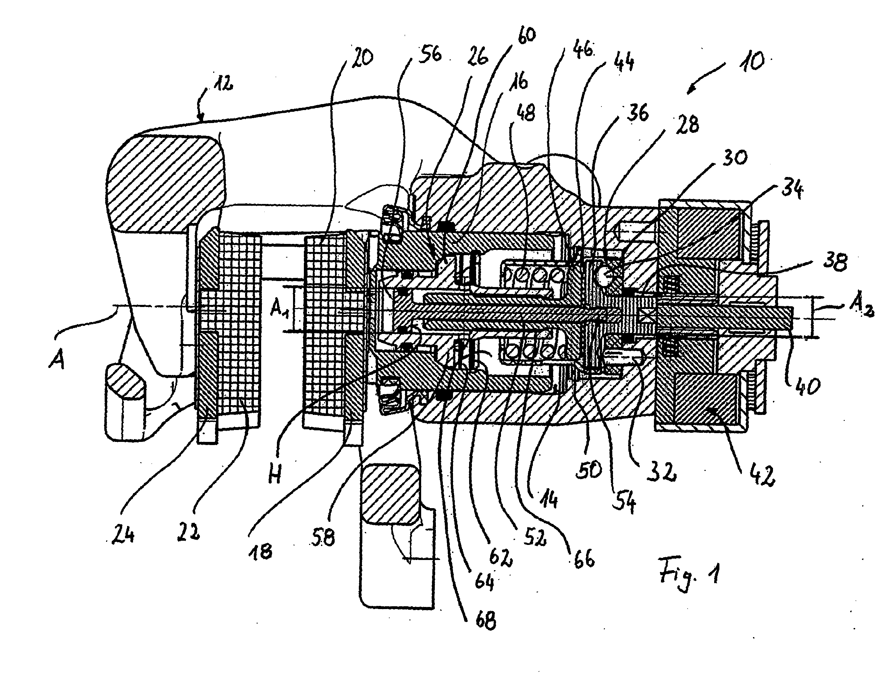

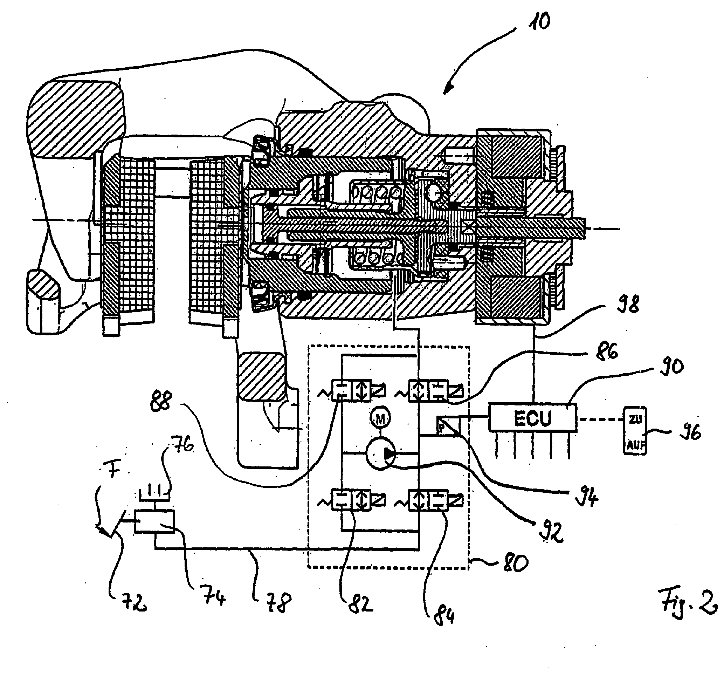

Im Folgenden soll zunächst das erste Ausführungsbeispiel mit Bezug auf Figuren 1 und 2 beschrieben werden.

In Figur 1 ist eine erfindungsgemäße Fahrzeugbremse allgemein mit 10 bezeichnet. Diese ist ausgeführt mit einem Gehäuse 12, das eine zylindrische Öffnung 14 aufweist. In der zylindrischen Öffnung 14 ist ein Bremskolben 16 fluiddicht verschiebbar aufgenommen. Der Bremskolben 16 ist an seinem in Figur 1 linken Ende mit einem Bremsbelagträger 18 mechanisch gekoppelt, an welchem ein Bremsbelag 20 befestigt ist. Dem Bremsbelag 20 liegt ein weiterer Bremsbelag 22 gegenüber, der an einem korrespondierenden Bremsbelagträger 24 befestigt ist. Die Bremsbelagträger 18 und 24 sind in dem Gehäuse 12 in herkömmlicher Weise nach dem Schwimmsattelprinzip aufgenommen. Dies bedeutet, dass bei einer Verlagerung des Bremsbelagträgers 18 entlang der Kolbenlängsachse A in Figur 1 nach links eine Komplementärverlagerung des Bremsbelagträgers 24 entlang der Kolbenlängsachse A in Figur 1 in Richtung nach rechts erfolgt, so dass auf eine zwischen den Bremsbelegen 20 und 22 befindliche, in der Figur 1 nicht gezeichnete Bremsscheibe beidseitig über die Bremsbelege 20 und 22 eine Klemmkraft ausgeübt wird.

Die Fahrzeugbremse 10 umfasst ferner eine Blockiereinrichtung 26, mittels welcher der Bremskolben 16 in verschiedenen Axialpositionen entlang der Kolbenlängsachse A arretiert werden kann. Die Blockiereinrichtung 26 umfasst in dem ersten Ausführungsbeispiel eine Rampenanordnung 28 mit einer Rampenscheibe 30, die mittels eines Bolzens 32 an dem Gehäuse 12 festgelegt ist. An der gehäusefeste Rampenscheibe 30 sind drei in Umfangsrichtung langgestreckte, wannenartige Rampen ausgebildet, die je einen kugelförmigen Spreizkörper 34 aufnehmen. Die Spreizkörper 34 wirken mit je einer entsprechenden Rampe eines Rampenbauteils 36 zusammen. Dieses Rampenbauteil 36 weist einen Wellenansatz 38 auf, der abgedichtet in dem Gehäuse 12 drehbar gelagert ist. An den Wellenansatz schließt sich drehfest gekoppelt eine Lagerwelle 40 an, die über eine Dreh-Magnetanordnung 42 um die Längsachse A drehantreibbar ist. Aufgrund der drehfesten Verbindung der Lagerwelle 40 und des Wellenansatzes 38 lässt sich somit das Rampenbauteil 36 um die Kolbenlängsachse A herum drehantreiben.

An der dem Bremskolben 16 zugewandten Seite des Rampenbauteils 36 stützt sich unter Vermittlung eines Gleitlagers 44 ein Stützbauteil 46 ab. Das Stützbauteil 46 ist somit um die Kolbenlängsachse A reibungsarm relativ zu dem Rampenbauteil 36 verdrehbar. Das Stützbauteil 46 wird über eine Druckfeder 48 gegen das Rampenbauteil 36 vorgespannt. Die Druckfeder 48 stützt sich mit ihrem einen Ende an dem durchmessergroßen Flansch des Stützbauteils 46 ab und mit ihrem anderen Ende an dem Boden eines gehäusefesten Napfes 50.

Das Stützbauteil 46 ist mit einer axialen Durchgangsbohrung ausgebildet, in der ein Schaft eines Übertragungselements 52 verschiebbar aufgenommen ist. Das Übertragungselement 52 ist mit seinem bremskolbenfernen Ende bei 54 fest mit dem Rampenbauteil 36 verbunden, beispielsweise in dieses eingeschraubt. An seinem bremskolbennahen Ende weist das Übertragungselement 52 einen Führungsflansch 56 auf. Der Führungsflansch 56 ist vermittels eines Dichtelements dichtend in einer Innenbohrung eines Blockierelements 58 aufgenommen. Das Blockierelement 58 ist wiederum verlagerbar in dem Bremskolben 16 geführt. Es weist bei 60 einen konischen Flansch auf, der mit einem korrespondierenden Innenkonus am Bremskolben 16 in Eingriff bringbar ist.

Das Blockierelement 58 kann über einen Sicherungsring 62 und eine Federscheibe 64 bei einer Bewegung des Bremskolbens 16 in Figur 1 nach links mitgenommen werden. Es ist weiter anzumerken, dass das Blockierelement 58 über eine Steilgewindepaarung 66 mit dem Stützbauteil 46 gewindemäßig gekoppelt ist. Die Steilgewindepaarung 66 ist selbsthemmend ausgebildet und weist ein genau festgelegtes Gewindespiel auf.

Ergänzend ist noch anzumerken, dass die Fläche A₁ des Führungsflansches 56 so groß ausgebildet ist, wie die nicht in einer Fluidkammer 68 liegende und daher auch nicht mit Hydraulikfluid in Kontakt tretende Fläche A₂ des in dem Gehäuse dicht geführten Wellenansatzes 38. Dadurch wird bei Füllung der in den Figuren mit 68 bezeichneten Fluidkammer die aus Rampenbauteil 36 und Übertragungselement 52 zusammengesetzte Baugruppe druckentlastet. Mit anderen Worten werden alle durch den an dieser Baugruppe anliegenden Hydraulikdruck hervorgerufenen Reaktionskräfte ausgeglichen, was insbesondere auf die Wirkung der hydraulisch aktiven Fläche H des Führungsflansches 56 zurückzuführen ist, die der Fluidkammer 68 zugewandt ist.

Bezugnehmend auf Figur 2 erkennt man dort die Anordnung gemäß Figur 1 in verkleinerter Darstellung und zusätzlich schematisiert gezeigte Komponenten einer Bremsanlage. Im Einzelnen sind dies ein Bremspedal 72, das mit einer Bremskraftverstärker-Hauptbremszylindereinheit 74 zusammenwirkt. Über eine Druckleitung 78 wird aus einem Reservoir 76 in Reaktion auf eine auf das Bremspedal ausgeübte Betätigungskraft F Hydraulikfliuid einem Hydrauliksystem 80, vorzugsweise einer ABS/ESP-Anlage, zugeführt. Dieses umfasst Steuerventile 82, 84, 86, 88, die über eine elektronische Steuereinheit 90 ansteuerbar sind. Ferner umfasst das Hydrauliksystem eine motorisch angetriebene Druckpumpe 92, die ebenfalls mit der elektronischen Steuereinheit 90 gekoppelt ist. Darüber hinaus kann ein Drucksensor 94 vorgesehen sein, um den in die Fluidkammer 68 eingeleiteten Hydraulikdruck bei geöffnetem Steuerventil 86 zu erfassen. Sofern kein Drucksensor vorgesehen ist, z.B. aus Kostengründen, kann der in die Fluidkammer 68 eingesteuerte Hydraulikdruck anhand eines mathematischen Modells bestimmt werden. Die elektronische Steuereinheit 90 ist über einen Feststellbremsbetätigungsschhalter 96 ansteuerbar und über eine Verbindungsleitung 98 mit der Dreh-Magnetanordnung 42 gemäß Figur 1 zur Ansteuerung derselben verbunden.

Die Fahrzeugbremse 10 gemäß Figuren 1 und 2 funktioniert wie folgt:

In einer Betriebsbremssituation, in welcher eine zwischen den Bremsbelägen 20 und 22 vorhandene, in den Figuren jedoch nicht gezeigte rotierende Bremsscheibe abgebremst werden soll, wird die Fluidkammer 68 mit Hydraulikfluid beschickt und dadurch der Bremskolben 16 innerhalb des Gehäuses 12 verschoben. Solange diese Verschiebung nicht größer ist als das in der Steilgewindepaarung 66 zwischen dem Stützbauteil 46 und dem Blockierelement 58 bestehende Gewindespiel ist, das dem vorgesehenen Bremslüftspiel entspricht, bewegt sich das Blockierelement 58 vollständig mit dem Bremskolben 16 mit.

Wenn jedoch infolge einer Abnutzung der Bremsbeläge ein über das vorgesehene Bremslüftspiel hinausgehender Weg des Bremskolbens 16 erforderlich ist, um die Bremsbeläge 20 und 22 an die nicht gezeigte Bremsscheibe anzulegen, dann hindert die Druckfeder 48 das Stützbauteil 46 daran, bei hydraulischer Betätigung die gesamte Verschiebung des Bremskolbens 16 zur Bremsscheibe hin mitzumachen. Infolgedessen wird der konische Flansch 60 des Blockierelements 58 gegen den Widerstand der Federscheibe 64, der schwächer ist als die Vorspannung der Druckfeder 48, vom Innenkonus etwas abgehoben. Das Blockierelement 58 ist somit an einer Drehung um die Achse A nicht mehr gehindert.

Die von der Steilgewindepaarung 66 übertragene Axialkraft, mit der das Stützbauteil 46 versucht, das Blockierelement 58 zurückzuhalten, hat eine Umfangskomponente. Daraus ergibt sich ein Drehmoment, durch welches das Blockierelement 58 nun derart gedreht wird, dass es sich vom Stützbauteil 46 abschraubt. Infolgedessen kommt der konische Flansch 60 wieder am Innenkonus des Bremskolbens 16 zum Anliegen. Da die wirksame Länge der von dem Stützbauteil 46 und dem Blockierelement 58 gebildeten Baugruppe nun vergrößert ist, wird der Bremskolben 16 nach der Bremsbetätigung daran gehindert, ganz in seine ursprüngliche Ausgangsstellung zurückzukehren. Das Bremslüftspiel ist somit wieder auf seinen Sollbetrag verkleinert worden.

Falls bei einer kräftigen hydraulischen Bremsbetätigung innerhalb der Fluidkammer 68 ein Druck von beispielsweise 20 bar oder mehr entsteht, muss insbesondere im Bereich der Bremsbeläge 20 und 22, der Bremsbelagträger 18 und 24 sowie des Gehäuses 10 mit elastischen Verformungen gerechnet werden. Eine Nachstellung, die solche vorübergehenden Verformungen kompensieren würde, ist unerwünscht und wird deshalb folgendermaßen vermieden: der Druck in der Fluidkammer 68 wirkt auch auf das Blockierelement 58. Bei kräftiger hydraulischer Betätigung sind die von der Federscheibe 64 und vom hydraulischen Druck auf das Blockierelement 58 ausgeübten axialen Kräfte insgesamt größer als die Kraft, die die Druckfeder 48 auf den bremskolbenfernen Flansch des Stützbauteils 46 ausübt. Die Druckfeder 48 ist also nicht mehr imstande, das Stützbauteil 46 festzuhalten. Dadurch kann der konische Flansch 60 nicht vom Innenkonus abheben. Das Blockierelement 58 wird somit daran gehindert, sich zu drehen, so dass die Bremsbetätigung ohne Nachstellung stattfindet. Erst wenn der hydraulische Druck unter den genannten Schwellenwert von beispielsweise 20 bar gesunken ist, kann eine Nachstellung nachgeholt werden, wenn dies durch fortgeschrittenen Belagverschleiß der Bremsbeläge 18 und 20 nötig geworden ist.

Im Folgenden soll auf die Aktivierung der Feststellbremsfunktion der erfindungsgemäßen Fahrzeugbremse 10 eingegangen werden, bei welcher die zwischen den Bremsbelägen 20 und 22 vorhandene Bremsscheibe gegen ein unbeabsichtigtes Drehen blockiert werden soll. Zur Erläuterung der Feststellbremsfunktion soll zusätzlich auf Fig. 2 Bezug genommen werden.

Zum Betätigen der Fahrzeugbremse 10 in einer Feststellbremssituation auf eine Betätigung des Schalters 96 hin, wird zunächst der Fluidkammer 68 Hydraulikfluid zugeführt und der darin herrschende Hydraulikdruck von einem Wert von beispielsweise 0 bar auf einen Wert von beispielsweise 150 bar erhöht. Das Hydraulikfluid kann durch die Betätigung des Bremspedals 72 durch den Fahrer oder automatisch unabhängig oder zusätzlich zu einer Bremspedalbetätigung vermittels der Pumpe ähnlich wie bei einem automatischen Bremsvorgang, beispielsweise mittels einer Fahrdynamikregelung, beispielsweise gesteuert durch die ECU 90, zugeführt werden. Dabei werden von der ECU 90 die Steuerventile 82 und 84 geschaltet, wobei das in seinem nicht betätigten Zustand geöffnete Steuerventil 84 geschlossen und das in seinem nicht betätigten Zustand geschlossene Steuerventil 82 geöffnet wird, so dass die Pumpe 92 Hydraulikfluid aus dem Reservoir 76 entnehmen kann. Eine Ansteuerung der Steuerventile 86 und 88 ist für die Feststellbremsfunktion in der Regel nicht erforderlich. Daraus ergibt sich eine Klemmkraft an den Bremsbelägen 20 und 22. Durch eine derartige Druckbeaufschlagung wird, wie vorstehend bereits geschildert, das Blockierelement 58 in Anlage mit dem Bremskolben 16 gehalten. Das Blockierelement 58 zieht über die Steilgewindepaarung das Stützbauteil 46 mit, so dass ein kleiner Spalt zwischen dem Rampenbauteil 36 und dem Axiallager 44 entsteht. Dieser kleine Spalt beträgt beispielsweise zwei bis drei Millimeter. Das Axiallager 44 wird dabei allein auf dem Schaft des Übertragungselements 52 gehalten.

In der Folge wird das Ventil 84 geschlossen, so dass der Druck der Fluidkammer 68 im Wesentlichen - sieht man einmal von Setzvorgängen ab - gehalten wird. Ist dieser Zustand erreicht, so wird nun die Drehmagnetanordnung 42 über die elektronische Steuereinheit 90 angesteuert. Diese treibt über die drehangetriebene Lagerwelle 40 das Rampenbauteil 36 an, so dass sich dieses um die Drehachse A dreht und aufgrund einer durch die Welzkörper 34 und die Rampenflächen hervorgerufen Spreizbewegung in axialer Richtung Figur 1 relativ zu der Rampenscheibe 30 nach links verlagert.

Ein wesentlicher Aspekt der Erfindung liegt darin, dass diese Bewegung des Rampenbauteils 36 mit sehr kleinen Stellkräften realisiert werden kann. Dies liegt daran, dass die hydraulisch aktive Fläche H des mit dem Rampenbauteils 36 fest gekoppelten Führungsflansches 56 des Übertragungselements 52 diejenigen hydraulischen Gegenkräfte kompensiert, die einer Bewegung des Rampenbauteils 36 in die Fluidkammer 68 hinein entgegen wirken würden.

Dieser Effekt stellt sich insbesondere dann ein, wenn die hydraulisch inaktive (und daher zu kompensierende) Fläche A₂ des Wellenansatzes 38 gleich der Fläche A₁ des Führungsflansches 56 ist. Genauer gesagt, müsste von beiden Flächen noch die hydraulische inaktive Querschnittsfläche des Schaftes des Übertragungselements 52 abgezogen werden. Bei einer derartigen Flächengleichheit A2 = A1 gilt die Beziehung, dass die aufgrund des in der Fluidkammer 68 herrschenden Hydraulikdrucks auftretenden Reaktionskräfte F₁ und F₂ ebenfalls gleich sind und sich somit aufheben.

Dieses Prinzip wird erfindungsgemäß dazu genutzt, die Dreh-Magnetanordnung 42 so leistungsschwach wie möglich auszugestalten, um somit Kosteneinsparungen bei der Bauteilbeschaffung sowie eine Bauraumreduzierung zu erreichen. Es reicht aus, mit sehr geringen Stellkräften das Rampenbauteil 36 über den vorstehend angesprochenen Spalt durch eine Spreizung relativ zu der Rampenscheibe 30 in Richtung der Achse A zu verlagern, bis dieses wieder an dem Gleitlager anliegt.

Sodann kann das Ventil 84 wieder geöffnet werden, so dass das Hydraulikfluid aus der Fluidkammer 68 austreten kann. In der Folge versucht der Bremskolben 16 sich in Figur 1 nach rechts zurückzuverlagern, stützt sich jedoch über das Blokierelement 58, das Stützbauteil 56 und das Gleitlager 44 an dem in Figur 1 nach links verlagerten Rampenbauteil 36 ab, welches sich wiederum über die Wälzkörper 34 an der gehäusefesten Rampenscheibe 30 abstützt. Es kommt zu einer minimalen Rückstellbewegung aufgrund von Setzvorgängen, die jedoch vernachlässigbar klein ist, so dass die verbleibende Klemmkraft immer noch groß genug ist, um auch nach vollkommener Reduzierung des Hydraulikdrucks in der Fluidkammer 68 weiterhin eine hinreichende Klemmwirkung aufrechterhalten zu können, die ausreicht, um die Bremsscheibe gegen ein unbeabsichtigtes Drehen zu sichern.

Zum Lösen der Feststellbremsefunktion nach entsprechender Betätigung des Schalters 96 wird der Hydraulikdruck in der Fluidkammer 68 wieder erhöht, bis er den vorstehend genannten Wert von beispielsweise 150 bar erreicht. Dadurch erhöht sich die Klemmkraft auch wieder geringfügig, bis sie schließlich im Wesentlichen den vorangehend genannten maximalen Klemmkraftwert erreicht, bei welcher das Stützbauteil 46 wiederum geringfügig von dem Rampenbauteil 36 in Figur 1 nach links verlagert wurde. Sodann erfolgt eine Ansteuerung der Dreh-Magnetanordnung 42, so dass das Rampenbauteil 36 selbst durch die kleinen Rückstellkräfte der Dreh-Magnetanordnung 42 wieder in seine Ausgangsstellung verlagert werden kann. In der Folge wird Hydraulikfluid aus der Fluidkammer 58 abgelassen, so dass sich diese leeren kann und der Bremskolben 16 in seine in Figur 1 gezeigte Ausgangsstellung zurückkehren kann.

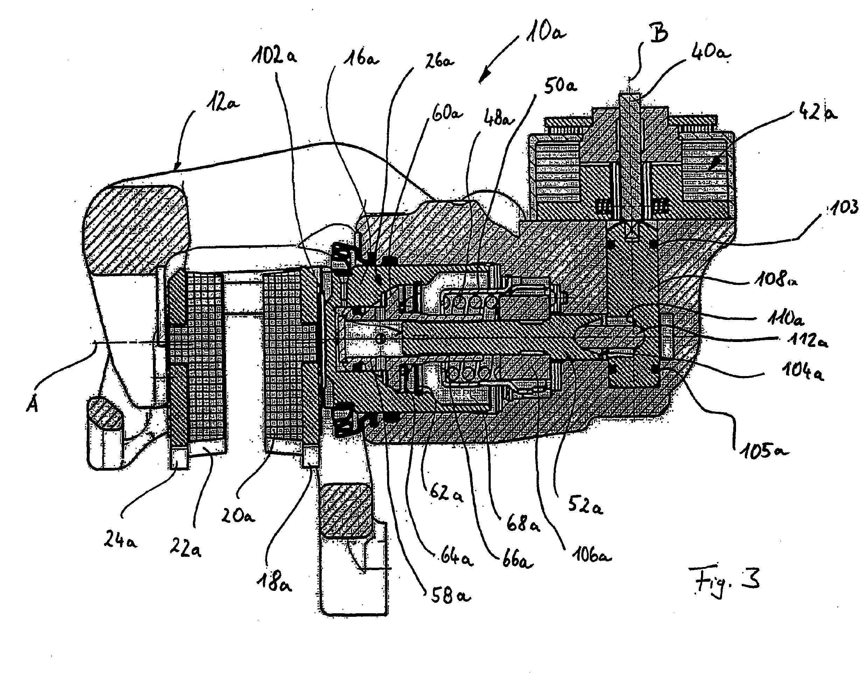

Figur 3 zeigt ein zweites Ausführungsbeispiel der Erfindung. Zur Vermeidung von Wiederholungen und zur Vereinfachung der Beschreibung soll im Folgenden nur auf die Unterschiede des zweiten Ausführungsbeispiels gemäß Figur 3 zu dem ersten Ausführungsbeispiel gemäß Figuren 1 und 2 eingegangen werden. Es werden für gleichwirkende oder gleichartige Komponenten dieselben Bezugszeichen wie bei der Beschreibung des ersten Ausführungsbeispiels verwendet, jedoch mit dem Kleinbuchstaben "a" nachgestellt.

Das zweite Ausführungsbeispiel gemäß Figur 3 unterscheidet sich von dem ersten Ausführungsbeispiel gemäß Figuren 1 und 2 in der Anordnung der Dreh-Magnetanordnung 42a im Gehäuse 12a sowie in der Art der Übertragung der von der Dreh-Magnetanordnung 42a ausgehenden Drehbewegung. Mit dem Blockierelement 58a ist das Übertragungselement 52a über die Steilgewindepaarung 66a verbunden. Das Übertragungselement 52a weist eine erste Stirnfläche 102a auf, die dem Bremskolben 16a zugewandt ist, sowie eine zweite hydraulisch wirksame Stirnfläche 104a, die auf der von dem Bremskolben 16a abgewandten Seite des Übertragungselements 52a angeordnet ist. Das Übertragungselement 52a ist ferner mit einem Anschlagring 106a in Mitnahmeverbindung gekoppelt. In dem Gehäuse 12a ist im Wesentlichen senkrechter Ausrichtung zu den Übertragungselement 52a, das heißt im Wesentlichen senkrecht zu der Kolbenlängsachse A, ein Profilbolzen 108a um die Drehachse B drehbar aufgenommen. Der Profilbolzen 108a ist mit Ringdichtungen 103a und 105a fluiddicht in dem Gehäuse gelagert. Er ist drehfest mit der über die Dreh-Magnetanordnung 42a drehantreibbaren Lagerwelle 40a gekoppelt. Der Profilbolzen 108a weist eine Steuerkurve 110a auf, in der ein Zapfenelement 112a geführt ist. Das Zapfenelement 112a - ist durch Drehung des Profilbolzens 108a um die Drehachse B - in Richtung der Kolbenlängsachse A auf den Bremskolben 16a zu oder von diesem weg verlagerbar. Mit anderen Worten wird bei einer Drehbewegung des Profiiboizens 108a das Übertragungselement 52a auf dem Bremskolben 16a zu oder von diesem weg bewegt.

Die Steuerkurve 110a ist derart ausgebildet, dass sich der Profilbolzen 108a bei einer Druckbeaufschlagung über das Zapfenelement 112a in Figur 3 entlang der Kolbenlängsachse A nach rechts nicht selbsttätig um die Drehachse B dreht.

Die Funktionsweise der Fahrzeugbremse 10a gemäß Figur 3 entspricht grundsätzlich der Funktionsweise der Fahrzeugbremse 10 gemäß Figuren 1 und 2. Statt einer Aufspreizung der Rampenanordnung 28 erfolgt jedoch zur Aktivierung der Feststellbremsfunktion nach einer Befüllung der Fluidkammer 68a eine Verstellung des Profilbolzens 108a, so dass der Zapfen 112a dem Übertragungselement 52a nachgeführt und mit diesem wieder in Anlage gebracht wird. In der Folge kann sich bei anschließendem Ablassen von Hydraulikfluid aus der Fluidkammer 68a das Blockierelement 58a über das Übertragungselement 52a und den Zapfen 112a an der Steuerkurve 110a des Profilbolzens 108a abstützen. Somit kann eine Klemmkraft aufrecht erhalten werden. Zum Lösen der Feststellbremswirkung wird bei der Ausführungsform gemäß Figur 3 wiederum die Fluidkammer 68a mit Hydraulikfluid gefüllt, so dass der Profilbolzen 108a von dem Zapfen 112a entlastet wird und sich leichtgängig um die Drehachse B in seine in Figur 3 gezeigte bremswirkungsfreie Ausgangsstellung drehen kann.

Die Betriebsbremsung erfolgt in gleicher Weise, wie vorstehend mit Bezug auf Figuren 1 und 2 erläutert. Dabei wirkt die Gewindepaarung 66a zwischen dem Blockierelement 58a und dem Übertragungselement 52a ebenso wie die Gewindepaarung 66 gemäß vorstehender Erläuterung.

Auch das Ausführungsbeispiel gemäß Figur 3 zeigt aufgrund der im Wesentlichen gleichen Dimensionierung der hydraulisch aktiven Stirnflächen 102a und 104a eine Möglichkeit zur druckentlasteten Feststellbremsaktivierung und erlaubt somit eine leistungsschwache und damit kostengünstige Ausbildung der Dreh-Magnetanordnung 42a. Darüber hinaus bietet die Ausführungsform gemäß Figur 3 den Vorteil einer verkürzten Gestaltung in der Richtung der Kolbenlängsachse A, wodurch weiterer Bauraum gewonnen werden kann.

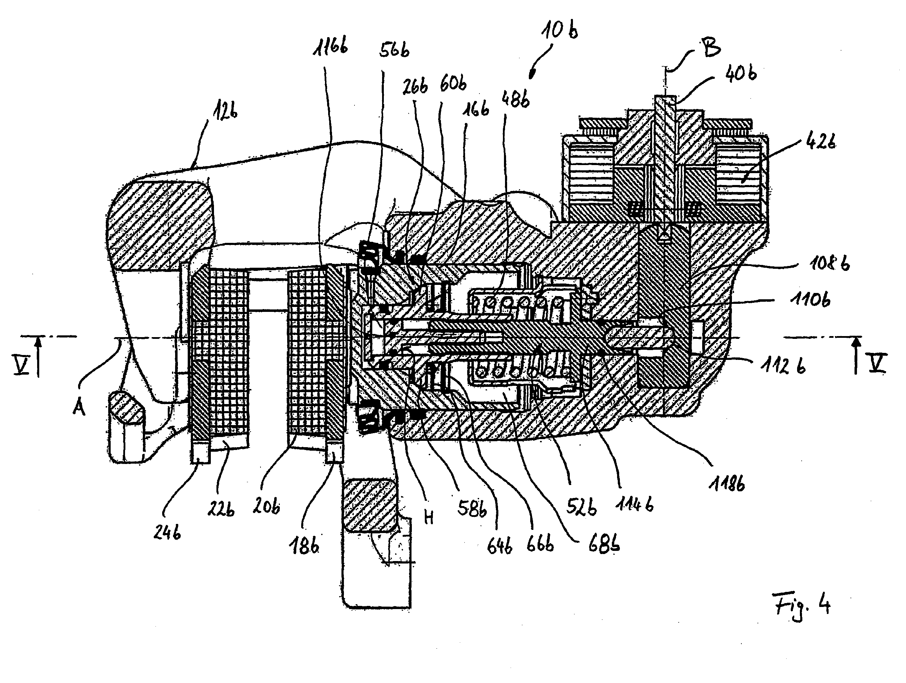

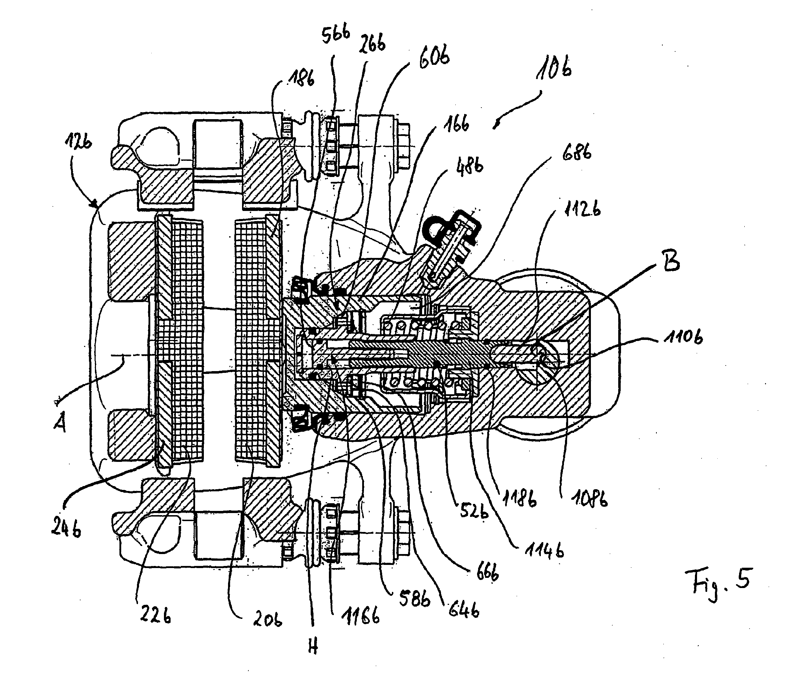

Fig.4 und 5 zeigen ein drittes Ausführungsbeispiel der vorliegenden Erfindung. Zur Vermeidung von Wiederholungen und zur Vereinfachung der Beschreibung soll im Folgenden nur auf die Unterschiede des dritten Ausführungsbeispiels gemäß Fig.4 und 5 zu dem ersten und zweiten Ausführungsbeispiel gemäß Fig.1 bis 3 eingegangen werden. Es werden für gleichwirkende oder gleichartige Komponenten die selben Bezugszeichen wie bei der Beschreibung des ersten Ausführungsbeispiels verwendet, jedoch mit dem Kleinbuchstaben "b" nachgestellt.

Das dritte Ausführungsbeispiel gemäß Fig.4 und 5 ergibt sich quasi als Kombination des ersten Ausführungsbeispiels gemäß Fig.1 und 2 und des zweiten Ausführungsbeispiels gemäß Fig.3. Die Betätigungseinrichtung ist wiederum mit einem Profilbolzen 108b ausgebildet, der über eine Dreh-Magnetanordnung 42b im Gehäuse 12b drehangetrieben wird. Der Profilbolzen 108b weist wiederum eine Steuerkurve 110b auf, deren Form aus Fig.5 hervorgeht. Bei einer Drehung des Profilbolzens 108b um die Drehachse B kommt es zu einer entsprechenden Verlagerung der Steuerkurve 110b und damit zu einer Verlagerung des Zapfenelements 112b. Diese Verlagerung des Zapfenelements 112b wird auf das Übertragungselement 52b übertragen, so dass das Übertragungselement 52b entlang der Kolbenlängsachse A verlagert wird. Allerdings ist das Übertragungselement 52b nicht wie im zweiten Ausführungsbeispiel gemäß Fig.3 einstückig ausgebildet und auch nicht komplett in dem Hydraulikfluid geführt. Vielmehr ist das Übertragungselement 52b zweiteilig ausgebildet, nämlich aus dem Übertragungselementteil 114b und dem Übertragungselementtell 116b, das mit dem Übertragungselementteil 114b fest verschraubt ist. Das Übertragungselementteit 114b gleicht dem Übertragungselement 52a aus dem zweiten Ausführungsbeispiel, ist jedoch mit einem Dichtungsring 118b dicht in dem Gehäuse 12b geführt, so dass das mit dem Zapfenelement 112b in Kontakt stehende Ende des Übertragungselementteils 114b nicht mit Hydraulikfluiddruck beaufschlagt werden kann. Demnach ist es erforderlich, um die vorstehend mehrfach erwähnte Druckentlastung zu erreichen, wiederum eine Druckentlastungsfläche bereitzustellen. Diese Druckentlastungsfläche wird - in gleicher Weise wie beim ersten Ausführungsbeispiel gemäß Fig.1 und 2 - über die Fläche H an dem Führungsflansch 56b des Übertragungselementteils 116b bereitgestellt.

Bei einer Füllung der Fluidkammer 68b mit Hydraulikfluid unter hohem Druck lässt sich aufgrund der Wirkung der Druckentlastungsfläche H das aus den beiden Übertragungselementteilen 114b und 116b bestehende Übertragungselement 52b druckentlastet verlagern. Daher reicht wiederum eine relativ leistungsschwache Dreh-Magnetanordnung 42b aus, um das Übertragungselement 52b zur Aktivierung der Feststellbremswirkung zu verschieben.

Im übrigen funktioniert die Fahrzeugbremse 10b gemäß dem Ausführungsbeispiel nach Fig.4 und 5 genauso, wie vorstehend mit Bezug auf das erste und zweite Ausführungsbeispiel gemäß den Fig.1 bis 3 beschrieben.

## Patentansprüche

1. Fahrzeugbremse (10, 10a, 10b) mit
- einem Gehäuse (12, 12a, 12b),
- einem in dem Gehäuse (12, 12a, 12b) aufgenommenen Bremskolben (16, 16a, 16b), der mit einem Bremsbelag (20, 20a, 20b) gekoppelt ist,
- einer Blockiereinrichtung (26, 26a, 26b) zum Arretieren des Bremskolbens (16, 16a, 16b) innerhalb des Gehäuses (12, 12a, 12b) und
- einer Betätigungseinrichtung (42, 42a, 42b) zum Ansteuern der Blockiereinrichtung (26, 26a, 26b),
wobei der Bremskolben (16, 16a) mit dem Gehäuse (12, 12a, 12b) eine Fluidkammer (68, 68a, 68b) begrenzt, die mit Hydraulikfluid beschickbar ist, so dass der Bremskolben (16, 16a, 16b) zum Betätigen der Fahrzeugbremse (10, 10a, 10b) hydraulisch innerhalb des Gehäuses (12, 12a, 12b) entlang einer Kolbenlängsachse (A) verlagerbar ist,
**dadurch gekennzeichnet, dass** die Blockiereinrichtung (26, 26a, 26b) ein relativ zu dem Gehäuse (12, 12a, 12b) verlagerbares Übertragungselement (52, 52a, 52b) aufweist, welches die Blockiereinrichtung (26, 26a, 26b) bei deren Betätigung relativ zu einem innerhalb der Fluidkammer (68, 68a, 68b) herrschenden Fluiddruck druckentlastet.

2. Fahrzeugbremse (10, 10a, 10b) nach Anspruch 1,
**dadurch gekennzeichnet, dass** das Übertragungselement (52, 52a, 52b) wenigstens eine hydraulisch aktive mit Hydraulikfluid aus der Fluidkammer (68, 68a, 68b) druckbeaufschlagte Druckentlastungsfläche (H) aufweist.

3. Fahrzeugbremse (10, 10a, 10b) nach Anspruch 1,
**dadurch gekennzeichnet, dass** das Übertragungselement (52, 52a, 52b) zumindest mittelbar beidseits seiner bezüglich einer Verlagerung in der Fluidkammer (68, 68a, 68b) hydraulisch aktiven Flächen (102a, 104a) mit Hydraulikfluid aus der fluidkammer (68; 68a, 68b) druckbeaufschlagt ist.

4. Fahrzeugbremse (10, 10a, 10b) nach einem der Ansprüche 1 bis 3,
**dadurch gekennzeichnet, dass** die Betätigungseinrichtung (42, 42a, 42b) manuell oder motorisch antreibbar oder angetrieben ist.

5. Fahrzeugbremse (10, 10a, 10b) nach Anspruch 4,
**dadurch gekennzeichnet, dass** die Betätigungseinrichtung mit einem translatorischen oder rotatorischen Antrieb (42, 42a, 42b) motorisch antreibbar oder angetrieben ist.

6. Fahrzeugbremse (10, 10a, 10b) nach Anspruch 5,
**dadurch gekennzeichnet, dass** der Antrieb als Dreh-Elektromagnet (42, 42a, 42b) ausgebildet ist.

7. Fahrzeugbremse (10, 10a, 10b) nach einem der vorangehenden Ansprüche, **gekennzeichnet durch** ein Blockierelement (58, 58a, 58b), das zum Arretieren des Bremskolbens (16, 16a, 16b) an diesem angreift.

8. Fahrzeugbremse (10, 10a, 10b) nach Anspruch 7,
**dadurch gekennzeichnet, dass** das Blockierelement (58, 58a, 58b) in Mitnahmeverbindung mit dem Bremskolben (16, 16a, 16b) steht.

9. Fahrzeugbremse (10) nach einem der vorangehenden Ansprüche,
**dadurch gekennzeichnet, dass** die Blockiereinrichtung (26) eine Rampenanordnung (28) aufweist.

10. Fahrzeugbremse (10) nach Anspruch 9,
**dadurch gekennzeichnet, dass** die Rampenanordnung (28) wenigstens eine erste Rampenfläche aufweist, welche an dem Gehäuse (12) angebracht ist oder mit diesem drehfest gekoppelt ist, und wenigstens eine zweite Rampenfläche aufweist, die an einem relativ zu dem Gehäuse (12) axial verlagerbaren und mit dem Blockierelement (58) gekoppelten Rampenbauteil (26) ausgebildet ist, wobei bei Betätigung der Betätigungseinrichtung (42) die beiden Rampenflächen zur Verlagerung des Blockierelements (58) aneinander abgleiten.

11. Fahrzeugbremse (10) nach Anspruch 10,
**dadurch gekennzeichnet, dass** zwischen der wenigstens einen ersten Rampenfläche und der wenigstens einen zweiten Rampenfläche Wälzkörper (34) vorgesehen sind, über welche die wenigstens eine erste Rampenfläche mit der wenigstens einen zweiten Rampenfläche in Kontakt steht.

12. Fahrzeugbremse (10) nach Anspruch 10 oder 11,
**dadurch gekennzeichnet, dass** das Rampenbauteil (28) mit dem Übertragungselement (52) gekoppelt und durch dieses druckentlastet innerhalb der Fluidkammer (68) verlagerbar ist.

13. Fahrzeugbremse (10) nach einem der Ansprüche 1 bis 8,
**dadurch gekennzeichnet, dass** die Blockiereinrichtung (26) einen drehantreibbaren Profilbolzen (108a) mit einer Steuerkurve (110a) aufweist, der je nach Drehstellung der Steuerkurve (110a) den Bremskolben (16a) arretiert oder freigibt.

14. Fahrzeugbremse (10a, 10b) nach Anspruch 13,
**dadurch gekennzeichnet, dass** das Übertragungselement (52a, 52b) mit dem Blockierelement (58a, 58b) zusammenwirkt und dass der Profilbolzen (108a, 108b) das Übertragungselement (58a) in Richtung der Kolbenlängsachse (A) verschiebt.

15. Fahrzeugbremse (10a, 10b) nach Anspruch 13 oder 14,
**dadurch gekennzeichnet, dass** die Drehachse (B) des Profilbolzens (108a, 108b) in nicht paralleler Ausrichtung zu der Kolbenlängsachse (A) angeordnet ist, vorzugsweise diese in einem Winkel von im Wesentlichen 90° schneidet.

16. Fahrzeugbremse (10a) nach einem der Ansprüche 13 bis 15,
**dadurch gekennzeichnet, dass** der Profilbolzen (108a) fluiddicht in dem Gehäuse (12a) geführt ist.

17. Fahrzeugbremse (10b) nach einem der vorangehenden Ansprüche,
**dadurch gekennzeichnet, dass** das Übertragungselement (52b) fluiddicht in dem Gehäuse (12b) geführt ist.

18. Fahrzeugbremse (10b) nach einem der vorangehenden Ansprüche,
**dadurch gekennzeichnet, dass** das Übertragungselement (52b) mehrteilig (114b, 116b) ausgebildet ist.

19. Fahrzeugbremse (10, 10a, 10b) nach einem der vorangehenden Ansprüche,
**dadurch gekennzeichnet, dass** in einer Betriebsbremssituation der Bremskolben (16, 16a, 16b) durch Beschicken und Entleeren der Fluidkammer (68, 68a, 68b) mit Hydraulikfluid innerhalb des Gehäuses (12, 12a, 12b) verlagerbar ist und dass in einer Feststellbremssituation zunächst der Bremskolben (16, 16a, 16b) durch Beschicken der Fluidkammer (68, 68a, 68b) mit Hydraulikfluid innerhalb des Gehäuses (12, 12a, 12b) verlagert wird, sodann die Betätigungseinrichtung (42, 42a, 42b) zur Arretierung des Bremskolbens (16, 16a, 16b) betätigt wird, wobei sich das Übertragungselement (52, 52a, 52b) auf den Bremskolben (16, 16a, 16b) zu bewegt, und schließlich für einen Druckabbau in der Fluidkammer (68, 68a, 68b) Hydraulikfluid aus der Fluidkammer (68, 68a, 68b) abgeführt wird.

20. Fahrzeugbremse (10, 10a, 10b) nach Anspruch 19,
**dadurch gekennzeichnet, dass** zum Auflösen der Feststellbremssituation die Fluidkammer (68, 68a, 68b) mit Hydraulikfluid beschickt wird, sodann die Blockiereinrichtung (58, 58a, 58b) freigegeben wird und schließlich für einen Druckabbau in der Fluidkammer (68, 68a, 68b) Hydraulikfluid aus der Fluidkammer (68, 68a, 68b) abgeführt wird.

21. Verfahren zum Betätigen einer Fahrzeugbremse (10, 10a, 10b) nach einem der vorangehenden Ansprüche,
**dadurch gekennzeichnet, dass** in einer Betriebsbremssituation der Bremskolben (16, 16a, 16b) dadurch innerhalb des Gehäuses (12, 12a, 12b) verlagert wird, dass Hydraulikfluid der Fluidkammer (68, 68a, 68b) zugeführt oder aus dieser abgeführt wird, und dass in einer Feststellbremssituation zunächst der Bremskolben (16, 16a, 16b) durch Beschicken der Fluidkammer (68, 68a, 68b) mit Hydraulikfluid innerhalb des Gehäuses (12, 12a, 12b) verlagert wird, sodann die Betätigungseinrichtung (42, 42a, 42b) zur Arretierung des Bremskolbens (16, 16a, 16b) betätigt wird, wobei sich das Übertragungselement (52, 52a, 52b) auf den Bremskolben (16, 16a, 16b) zu bewegt, und schließlich für einen Druckabbau in der Fluidkammer (68, 68a, 68b) Hydraulikfluid aus der Fluidkammer (68, 68a, 68b) abgeführt wird.

22. Verfahren nach Anspruch 21,
**dadurch gekennzeichnet, dass** zum Auflösen der Feststellbremssituation die Fluidkammer (68, 68a, 68b) mit Hydraulikfluid beschickt wird, sodann die Blockiereinrichtung (58, 58a, 58b) freigegeben wird und schließlich für einen Druckabbau in der Fluidkammer (68, 68a, 68b) Hydraulikfluid aus der Fluidkammer (68, 68a, 68b) abgeführt wird.

## Claims

1. Vehicle brake (10, 10a, 10b) having
- a housing (12, 12a, 12b),
- a brake piston (16, 16a, 16b) accommodated in the housing (12, 12a, 12b) and coupled to a brake lining (20, 20a, 20b),
- a blocking means (26, 26a, 26b) for arresting the brake piston (16, 16a, 16b) inside the housing (12, 12a, 12b) and
- an actuator (42, 42a, 42b) for controlling the blocking means (26, 26a, 26b), wherein the brake piston (16, 16a) defines together with the housing (12, 12a, 12b) a fluid chamber (68, 68a, 68b) adapted to be supplied with hydraulic fluid so that, in order to actuate the vehicle brake (10, 10a, 10b), the brake piston (16, 16a, 16b) is hydraulically displaceable inside the housing (12, 12a, 12b) along a longitudinal axis (A) of the piston,
**characterized in that** the blocking means (26, 26a, 26b) comprises a transmission element (52, 52a, 52b) which is displaceable relative to the housing (12, 12a, 12b) and relieves the blocking means (26, 26a, 26b) of pressure when the latter is actuated relative to a fluid pressure prevailing inside the fluid chamber (68, 68a, 68b).

2. Vehicle brake (10, 10a, 10b) according to claim 1,
**characterized in that** the transmission element (52, 52a, 52b) comprises at least one hydraulically active pressure relief surface (H) which is pressurized by hydraulic fluid from the fluid chamber (68, 68a, 68b).

3. Vehicle brake (10, 10a, 10b) according to claim 1,
**characterized in that** the transmission element (52, 52a, 52b) is pressurized, at least indirectly, at both sides of its with respect to a displacement in the fluid chamber (68, 68a, 68b) hydraulically active surfaces (102a, 104a) by hydraulic fluid from the fluid chamber (68, 68a, 68b).

4. Vehicle brake (10, 10a, 10b) according to one of claims 1 to 3,
**characterized in that** the actuator (42, 42a, 42b) can be driven or is driven either by a motor or manually.

5. Vehicle brake (10, 10a, 10b) according to claim 4,
**characterized in that** the actuator can be driven or is driven by a translatory or a rotary drive (42, 42a, 42b).

6. Vehicle brake (10, 10a, 10b) according to claim 5,
**characterized in that** the drive is configured as a rotating electromagnet (42, 42a, 42b).

7. Vehicle brake (10, 10a, 10b) according to one of the preceding claims,
**characterized by** a blocking element (58, 58a, 58b) which for arresting the brake piston (16, 16a, 16b) engages the same.

8. Vehicle brake (10, 10a, 10b) according to claim 7,
**characterized in that** the blocking element (58, 58a, 58b) is in a coupling connection with the brake piston (16, 16a, 16b).

9. Vehicle brake (10) according to one of the preceding claims,
**characterized in that** the blocking means (26) comprises a ramp structure (28).

10. Vehicle brake (10) according to claim 9,
**characterized in that** the ramp structure (28) has at least one first ramp surface that is attached to the housing (12) or coupled to the same rotation-proof manner and has at least one second ramp surface that is provided at a ramp component (26) which is axially displaceable relative to the housing (12) and coupled to the blocking element (58), the two ramp surfaces sliding off each other upon actuation of the actuator (42) in order to displace the blocking element (58).

11. Vehicle brake (10) according to claim 10,
**characterized in that** rolling elements (34) are provided between the at least one first ramp surface and the at least one second ramp surface through which the at least one first ramp surface is in contact with the at least one second ramp surface.

12. Vehicle brake (10) according to claim 10 or 11,
**characterized in that** the ramp component (28) is coupled to the transmission element (52) and is displaceable by the same in pressure-relieved manner inside the fluid chamber (68).

13. Vehicle brake (10) according to one of claims 1 to 8,
**characterized in that** the blocking means (26) is provided with a rotationally driven profile pin (108a) with a cam (110a), which profile pin (108a), depending on the rotational position of the cam (110a), arrests or releases the brake piston (16a).

14. Vehicle brake (10a, 10b) according to claim 13,
**characterized in that** the transmission element (52a, 52b) cooperates with the blocking element (58a, 58b) and that the profile pin (108a, 108b) moves the transmission element (58a) in the direction of the longitudinal axis (A) of the piston.

15. Vehicle brake (10a, 10b) according to claim 13 or 14,
**characterized in that** the axis of rotation (B) of the profile pin (108a, 108b) is disposed in non-parallel alignment with the longitudinal axis (A) of the piston, preferably intersects it at an angle of substantially 90°.

16. Vehicle brake (10a) according to one of claims 13 to 15,
**characterized in that** the profile pin (108a) is guided in fluid-tight fashion in the housing (12a).

17. Vehicle brake (10b) according to one of the preceding claims,
**characterized in that** the transmission element (52b) is guided in fluid-tight fashion in the housing (12b).

18. Vehicle brake (10b) according to one of the preceding claims,
**characterized in that** the transmission element (52b) has a multipart (114b, 116b) design.

19. Vehicle brake (10, 10a, 10b) according to one of the preceding claims,
**characterized in that** in a service braking situation the brake piston (16, 16a, 16b) is displaceable inside the housing (12, 12a, 12b) by supplying the fluid chamber (68, 68a, 68b) with hydraulic fluid and emptying it, and that in a parking braking situation first the brake piston (16, 16a, 16b) is displaced inside the housing (12, 12a, 12b) by supplying hydraulic fluid into the fluid chamber (68, 68a, 68b), then the actuator (42, 42a, 42b) is actuated in order to arrest the brake piston (16, 16a, 16b), while the transmission element (52, 52a, 52b) moves toward the brake piston (16, 16a, 16b), and finally, for a pressure relief in the fluid chamber (68, 68a, 68b), hydraulic fluid is removed from the fluid chamber (68, 68a, 68b).

20. Vehicle brake (10, 10a, 10b) according to claim 19,
**characterized in that** in order to cancel the parking braking situation hydraulic fluid is fed into the fluid chamber (68, 68a, 68b), then the blocking means (58, 58a, 58b) is released and finally, for a pressure relief in the fluid chamber (68, 68a, 68b), hydraulic fluid is removed from the fluid chamber (68, 68a, 68b).

21. Method for operating a vehicle brake (10, 10a, 10b) according to one of the preceding claims,
**characterized in that** in a service braking situation the brake piston (16, 16a, 16b) is displaced inside the housing (12, 12a, 12b) **in that** hydraulic fluid is fed to the fluid chamber (68, 68a, 68b) or removed from it and that in a parking braking situation first the brake piston (16, 16a, 16b) is displaced inside the housing (12, 12a, 12b) by supplying hydraulic fluid to the fluid chamber (68, 68a, 68b), then the actuator (42, 42a, 42b) is actuated in order to arrest the brake piston (16, 16a, 16b), while the transmission element (52, 52a, 52b) moves toward the brake piston (16, 16a, 16b), and finally, for a pressure relief in the fluid chamber (68, 68a, 68b), hydraulic fluid is removed from the fluid chamber (68, 68a, 68b).

22. Method according to claim 21,
**characterized in that** for cancelling the parking braking situation hydraulic fluid is supplied into the fluid chamber (61, 68a, 68b), then the blocking means (58, 58a, 58b) is released and finally, for a pressure relief in the fluid chamber (68, 68a, 68b), hydraulic fluid is removed from the fluid chamber 68, 68a, 68b).

## Revendications

1. Frein de véhicule (10, 10a, 10b) comprenant
- un boîtier (12, 12a, 12b),
- un piston de frein (16, 16a, 16b) logé dans ledit boîtier (12, 12a, 12b) et couplé à une garniture de frein (20, 20a, 20b),
- un dispositif de blocage (26, 26a, 26b) permettant de bloquer le piston de frein (16, 16a, 16b) à l'intérieur du boîtier (12, 12a, 12b) et
- un dispositif d'actionnement (42, 42a, 42b) permettant de commander le dispositif de blocage (26, 26a, 26b),
le piston de frein (16, 16a) et le boîtier (12, 12a, 12b) délimitant une chambre fluidique (68, 68a, 68b) pouvant être remplie d'un fluide hydraulique de telle sorte que le piston de frein (16, 16a, 16b) puisse se déplacer le long d'un axe longitudinal de piston (A) pour actionner par voie hydraulique le frein de véhicule (10, 10a, 10b) dans le boîtier (12, 12a, 12b),
**caractérisé en ce que** le dispositif de blocage (26, 26a, 26b) présente un élément de transfert (52, 52a, 52b) mobile par rapport au boîtier (12, 12a, 12b) et permettant, lors de son actionnement, de décomprimer le dispositif de blocage (26, 26a, 26b) par rapport à une pression fluidique régnant dans la chambre fluidique (68, 68a, 68b).

2. Frein de véhicule (10, 10a, 10b) selon la revendication 1,
**caractérisé en ce que** l'élément de transfert (52, 52a, 52b) présente au moins une surface de décompression (H) hydrauliquement active mise sous pression par le fluide hydraulique de la chambre fluidique (68, 68a, 68b).

3. Frein de véhicule (10, 10a, 10b) selon la revendication 1,
**caractérisé en ce que** l'élément de transfert (52, 52a, 52b) est mis sous pression pour le moins indirectement de part et d'autre de ses surfaces (102a, 104a) hydrauliquement actives par rapport à un déplacement dans la chambre fluidique (68, 68a, 68b) par le fluide hydraulique de la chambre fluidique (68, 68a, 68b).

4. Frein de véhicule (10, 10a, 10b) selon l'une des revendications 1 à 3,
**caractérisé en ce que** le dispositif d'actionnement (42, 42a, 42b) peut être entraîné ou est entraîné manuellement ou par moteur.

5. Frein de véhicule (10, 10a, 10b) selon la revendication 4,
**caractérisé en ce que** le dispositif d'actionnement peut être entraîné ou est entraîné par moteur à l'aide d'un entraînement translatoire ou rotatif.

6. Frein de véhicule (10, 10a, 10b) selon la revendication 5,
**caractérisé en ce que** l'entraînement se présente sous forme d'un électro-aimant rotatif (42, 42a, 42b).

7. Frein de véhicule (10, 10a, 10b) selon l'une des revendications précédentes,
**caractérisé par** un élément de blocage (58, 58a, 58b) venant en prise avec le piston de frein (16, 16a, 16b) pour bloquer celui-ci.

8. Frein de véhicule (10, 10a, 10b) selon la revendication 7,
**caractérisé en ce que** ledit élément de blocage (58, 58a, 58b) est en liaison entraînante avec le piston de frein (16, 16a, 16b).

9. Frein de véhicule (10) selon l'une des revendications précédentes,
**caractérisé en ce que** le dispositif de blocage (26) présente un agencement à rampe (28).

10. Frein de véhicule (10) selon la revendication 9,
**caractérisé en ce que** l'agencement à rampe (28) présente au moins une première surface de rampe montée sur le boîtier (12) ou couplée à celui-ci fixe en rotation, et au moins une deuxième surface de rampe conçue sur une pièce de rampe pouvant se déplacer axialement par rapport au boîtier (12) et couplée à l'élément de blocage (58), les deux surfaces de rampe glissant l'une à côté de l'autre pour faire se déplacer l'élément de blocage (58) lorsque le dispositif d'actionnement (42) est actionné.

11. Frein de véhicule (10) selon la revendication 10,
**caractérisé en ce que**, entre ladite première et ladite deuxième surface de rampe, il est prévu des éléments roulants (34) par le biais desquels ladite première surface de rampe est en contact avec ladite deuxième surface de rampe.

12. Frein de véhicule (10) selon la revendication 10 ou 11,
**caractérisé en ce que** la pièce de rampe (28) est couplée à l'élément de transfert (52) et peut être déplacée sans pression par le biais de celui-ci à l'intérieur de la chambre fluidique (68).

13. Frein de véhicule (10) selon l'une des revendications 1 à 8,
**caractérisé en ce que** le dispositif de blocage (26) présente un boulon profilé (108a) entraînable en rotation et muni d'une came de commande (110a), lequel boulon bloque ou libère le piston de frein (16a) en fonction de la position de rotation de la came de commande (110a).

14. Frein de véhicule (10a, 10b) selon la revendication 13,
**caractérisé en ce que** l'élément de transfert (52a, 52b) coopère avec l'élément de blocage (58a, 58b) et le boulon profilé (108a, 108b) fait faire à l'élément de transfert (58a) un mouvement de translation dans le sens de l'axe longitudinal de piston (A).

15. Frein de véhicule (10a, 10b) selon la revendication 13 ou 14,
**caractérisé en ce que** l'axe de rotation (B) du boulon profilé (108a, 108b) est disposé dans un alignement non parallèle à l'axe longitudinal de piston (A), coupant préférentiellement celui-ci selon un angle pour l'essentiel de 90°.

16. Frein de véhicule (10a) l'une des revendications 13 à 15,
**caractérisé en ce que** le boulon profilé (108a) est guidé dans le boîtier (12a) de manière étanche au fluide.

17. Frein de véhicule (10b) selon l'une des revendications précédentes,
**caractérisé en ce que** l'élément de transfert (52b) est guidé dans le boîtier (12b) de manière étanche au fluide.

18. Frein de véhicule (10b) selon l'une des revendications précédentes,
**caractérisé en ce que** l'élément de transfert (52b) est constitué de plusieurs pièces (114b, 116b).

19. Frein de véhicule (10, 10a, 10b) selon l'une des revendications précédentes,
**caractérisé en ce que**, en situation de freinage de service, le piston de frein (16, 16a, 16b) peut se déplacer à l'intérieur du boîtier (12, 12a, 12b) du fait que la chambre fluidique (68, 68a, 68b) se remplit et se vide de fluide hydraulique, et que, en situation de freinage de stationnement, l'arrivée de fluide hydraulique dans la chambre fluidique (68, 68a, 68b) fait se déplacer le piston de frein (16, 16a, 16b) à l'intérieur du boîtier (12, 12a, 12b) après que le dispositif d'actionnement (42, 42a, 42b) a été actionné pour bloquer le piston de frein (16, 16a, 16b), l'élément de transfert (52, 52a, 52b) se déplaçant en direction du piston de frein (16, 16a, 16b) et du fluide hydraulique étant finalement évacué de la chambre fluidique (68, 68a, 68b) afin de réduire la pression dans la chambre fluidique (68, 68a, 68b).

20. Frein de véhicule (10, 10a, 10b) selon la revendication 19,
**caractérisé en ce que**, pour mettre fin à une situation de freinage de stationnement, la chambre fluidique (68, 68a, 68b) se remplit de fluide hydraulique après que le dispositif de blocage (58, 58a, 58b) a été libéré et que du fluide hydraulique a été finalement évacué de la chambre fluidique (68, 68a, 68b) afin de réduire la pression dans la chambre fluidique (68, 68a, 68b).

21. Procédé visant à actionner un frein de véhicule (10, 10a, 10b) selon l'une des revendications précédentes,
**caractérisé en ce que**, en situation de freinage de service, le piston de frein (16, 16a, 16b) se déplace à l'intérieur du boîtier (12, 12a, 12b) du fait que la chambre fluidique (68, 68a, 68b) se remplit de fluide hydraulique ou se vide, et que, en situation de freinage de stationnement, l'arrivée de fluide hydraulique dans la chambre fluidique (68, 68a, 68b) fait se déplacer le piston de frein (16, 16a, 16b) à l'intérieur du boîtier (12, 12a, 12b) après que le dispositif d'actionnement (42, 42a, 42b) a été actionné pour bloquer le piston de frein (16, 16a, 16b), l'élément de transfert (52, 52a, 52b) se déplaçant en direction du piston de frein (16, 16a, 16b) et du fluide hydraulique étant finalement évacué de la chambre fluidique (68, 68a, 68b) afin de réduire la pression dans la chambre fluidique (68, 68a, 68b).

22. Procédé selon la revendication 21,
**caractérisé en ce que**, pour mettre fin à une situation de freinage de stationnement, la chambre fluidique (68, 68a, 68b) se remplit de fluide hydraulique après que le dispositif de blocage (58, 58a, 58b) a été libéré et que le fluide hydraulique a finalement été évacué de la chambre fluidique (68, 68a, 68b) afin de réduire la pression dans la chambre fluidique (68, 68a, 68b).
